# EUROPEAN PATENT SPECIFICATION

(11) **EP 0 732 171 B1**
(45) Date of publication and mention of the grant of the patent: **29.08.2001**
(21) Application number: 96103927.8
(22) Date of filing: 13.03.1996
(51) Int. Cl.: B23Q 39/02, B23Q 5/20, B23Q 5/04

(54) **Multispindle machining unit for numeric-control machining centers**
Mehrspindelbearbeitungseinheit für numerisch gesteuertes Bearbeitungszentrum
Unité d'usinage multibroche pour un centre d'usinage à commande numérique

(30) Priority: 16.03.1995 IT VI950041
(43) Date of publication of application: 18.09.1996
(73) Proprietor: Riello Macchine Flessibili S.p.A., 36075 Montecchio Maggiore (Vicenza) (IT)
(72) Inventor: Brugnolo, Epifanio, 36075 Montecchio Maggiore (Vicenza) (IT); Tonegato, Sergio, 36075 Montecchio Maggiore (Vicenza) (IT)
(74) Representative: Forattini, Amelia

(56) References cited:
- DE-A- 3 941 480
- GB-A- 1 253 233
- GB-A- 2 199 273
- US-A- 4 563 925

## Description

The present invention relates to a multispindle machining unit, particularly for machine tools and numeric-control machining centers, and to its operating method.

Machining units are known including a supporting structure with a first longitudinal axis arranged radially with respect to the worktable. A support is anchored to the end of the supporting structure in a position that is adjacent to the worktable. A spindlehead is mounted so that it can rotate on the support about a second rotation axis that intersects the first axis. Multiple tool spindles are mounted on the head with secondary rotation axes that converge toward the intersection point of the first and second axes. A transmission means connects the spindles to a motor means that is rigidly coupled to the supporting structure, and a means for rotating the head is adapted to move each spindle into an indexed operating position.

In some of the conventional machines, the main shaft has a bevel gear that can be coupled to a pinion that is rigidly coupled to each individual spindle to cause its rotation when it is used. The head is rotated by means of adapted step motors. In order to index the head, that is to say, arrange the head in preset angular positions, pairs of crown gears, known as Hirt gears, are used, allowing high positioning precision. Every time the tool is changed, the spindle that has completed a machining step is halted and disconnected from the main shaft, then the head is rotated to move another spindle into the operating position, and finally the spindle is coupled to the main shaft and its rotation is resumed.

Because of the spindle deceleration and acceleration ramps, the tool changing times increase considerably and last on the average approximately 2ö4 seconds.

A further drawback of conventional machining units is the fact that the gears of the bevel pair, that connects the main shaft to the individual spindles, must be aligned to allow their meshing. To do this, it is necessary to find the alignment position by means of bidirectional movements controlled by an encoder and by sensors. In case of malfunction or inaccurate operation of the positioning system, the gears may clash, with consequent damage or breakage thereof.

A multispindle machine of the type defined in the introduction is known from German patent application DE-A-3 941 480. In this machine all the spindles of the head are constantly connected to the motor means even during the rotation of the head. For this purpose, the spindles mesh simultaneously with a gear that is made to rotate constantly by a main motor. The rotation of the head is actuated by a separate hydraulic motor by means of a peripheral ring gear. The variation of the speed and direction of rotation of the spindles occurs only after the completion of each individual machining step and before the beginning of the next step.

This arrangement is novel and practically eliminates the deceleration and acceleration ramps of the spindles, considerably reducing tool changing times to approximately 0.8ö1 second, but it is not free from drawbacks. Indeed, in order to ensure correct operation while all the spindles are turning, the head has a considerably complicated and expensive internal mechanism.

Furthermore, the continuous rotation of all the spindles, even during the tool changing step, considerably increases power consumption and wear of the moving parts, reducing their reliability.

Finally, currently applicable safety standards require all spindles to be backed off from the part being machined by at least 200 mm during the tool changing step. Therefore, an inactive step must in any case be taken into account and reduces the importance of a very fast tool change.

US-A-4,653,925 discloses a multispindle automatic turret lathe wherein the spindle support is coupled with the main driving motor for its intermittent indexing rotation.

The aim of the present invention is to improve the above described machines by providing a machining unit with multispindle head that in addition to significant speed in tool changing offers considerable structural simplicity and high reliability.

A particular object of the invention is to provide a multispindle machining unit that is cheaper and requires less maintenance than conventional ones.

Another object is to provide a machining unit that allows direct coupling of the main shaft to the individual spindles with no danger of gear clashing and breakage.

This aim, these objects, and others which will become apparent hereinafter, are achieved by a multispindle machining unit of the type defined in the introduction, characterized in that the transmission means for connecting the spindles to the motor means can be selectively coupled to the head rotation means, when the spindles are not moving and are spaced from the part being machined, or as an alternative, to the single spindle that acts on the part being machined, with the head in fixed indexing position, as defined in claim 1.

In other words, the motor means has the purpose of selectively actuating either a single spindle with the head in indexed position or the rotation of the head during the spindle halting step. In this way, part of the spindle halting time, required by safety standards, is recovered by the rotation of the head during backoff from the part being machined, reducing downtimes for tool changing.

One also obtains the advantage of considerably simplifying the motion transmission mechanism and the number of its components.

Since only one spindle at a time is kept in motion, wear of the rotating parts and energy consumption are reduced, whereas the reliability and life of the head as a whole are increased.

The transmission means includes a main shaft that is operatively coupled to the motor means and able to move longitudinally between an advanced operating position, which is close to the head, and a spaced operating position, which is spaced from the head.

The shaft has, at its advanced end, a hub with a peripheral pinion and an axial front cavity with straight internal grooves. Each spindle has, at its inside end, a connecting tang with external grooves that are shaped complementarily to the inside grooves of the front seat of the hub, in order to engage in the seat by virtue of the passage of the main shaft from its retracted position to the advanced one.

The head has a third crown gear that is meant to mesh with the pinion of the hub when the shaft is in its retracted position.

There is a means for the indexing of the head, which is constituted by a pair of first and second crown gears that are associated respectively with the head and with the support in mutually facing positions so as to mutually and selectively mesh in preset angular positions, in which one spindle at a time is aligned with the axis of the main shaft.

The head is supported so that it can slide along its indexing axis, and there is a second actuator means that acts on the head to make it perform a translatory motion in an axial direction between a lowered position, in which the first and second crown gears are close and mesh with each other, and a raised position, in which the first and second crown gears are mutually spaced and disengaged.

Further characteristics and advantages will become apparent from the following detailed description of an exemplifying but non-limitative embodiment of a machining unit according to the invention, illustrated with the aid of the accompanying drawings, wherein:

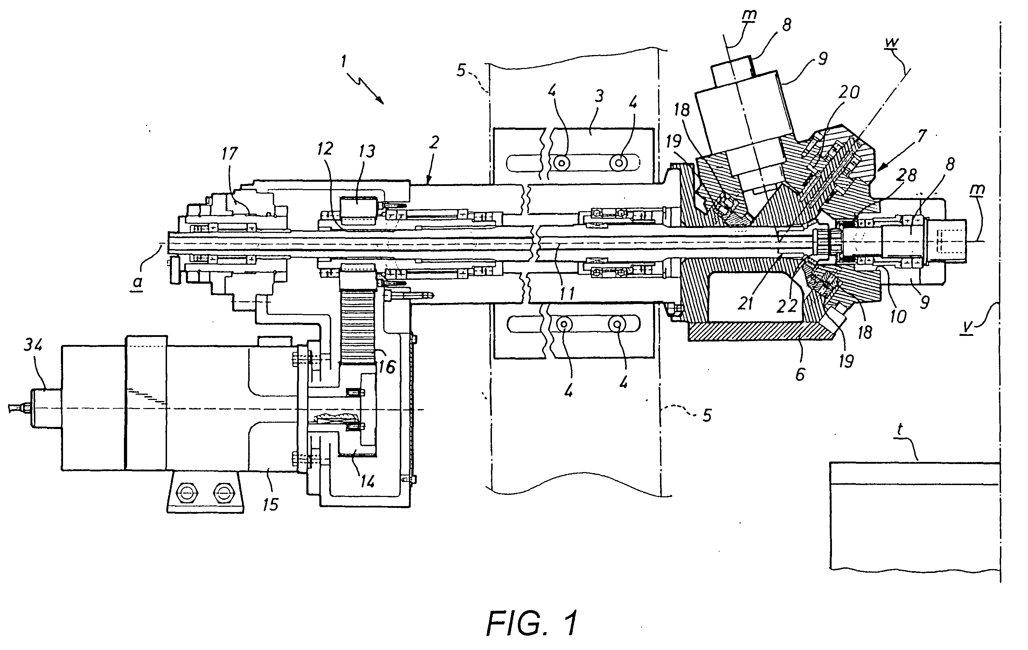

Figure 1 is a longitudinal sectional view of a machining unit according to the invention;
Figure 2 is a sectional view, in slightly enlarged scale, of a detail of Figure 1 in a first operating position;
Figure 3 is a view of the detail of Figure 2, in a second operating position;
Figure 4 is a perspective view of a detail of Figure 3;
Figure 5 is a view of the detail of Figure 2, in a third operating position;
Figure 6 is a perspective view of a detail of Figure 5.

With reference to the above figures, a machining unit according to the invention, generally designated by the reference numeral 1, includes a supporting structure 2 having an essentially tubular shape with a longitudinal axis a that is mounted in a cantilevered manner on a carriage 3. Carriage 3 can slide longitudinally on rollers 4 that are rigidly coupled to the cage-like frame of a multiple-head machine, schematically indicated by 5.

Longitudinal axis a is substantially horizontal and radial with respect to a worktable t that is schematically indicated by its vertical rotation axis v.

Other machining units, similar to the one described and not illustrated in the drawings, are also arranged radially and in positions that are angularly offset with respect to worktable t.

Each unit performs a series of machining operations that constitute machining steps of a machining station. The parts being machined are fixed on the turntable by fixtures

A support 6 is fixed to the end of the supporting structure 2 that is proximate to worktable t. A multispindle head 7 is mounted thereon and can rotate about an axis w that intersects the horizontal axis a of structure 2.

Head 7 supports multiple spindles 8, for example six or more, which can rotate about respective axes m and are accommodated in respective bushes 9 anchored in complementary seats 10 of head 7.

Head 7 can rotate about axis w so as to selectively align each individual spindle with axis a of structure 2.

A main shaft 11 is coaxial to axis a and is accommodated inside the structure 2. Main shaft 11 has a splined portion 12 at the end that is furthest from the head 7. A pulley 13 is keyed on splined portion 12 and pulley 13 is connected to a driving pulley 14 of an electric motor 15 by means of a toothed belt 16.

According to the invention, the main shaft 11 can move along its own axis between an advanced position, which is proximate to spindle 8 that is aligned with it, and a retracted position, which is spaced with respect to the same spindle 8, so as to selectively connect motor 15 to spindle 8, that is involved in the machining operation, or to a means for the rotation of the head about the indexing axis w. The axial translatory motion is imparted to shaft 11 by a first hydraulic cylinder 17 that is substantially coaxial to shaft 11.

A first crown gear 18 is anchored on head 7 and can mesh with a second crown gear 19 that is rigidly coupled to support 6 and is located so as to face the first crown gear.

Because of the selective meshing of the two crown gears 18 and 19, one obtains the locking of head 7 in an angularly preset position about indexing axis w, so that the rotation axis m of one of spindles 8 at a time is aligned with axis a.

A second hydraulic cylinder 20 is provided to make head 7 perform a translatory motion along axis w between a lowered position, in which first and second crown gears 18 and 19 mutually mesh, and a raised position, in which the crown gears are mutually spaced and disengaged and head 7 can be turned about axis w.

Shaft 11 has a hub 21, at its end that is advanced with respect to the head 7. Hub 21 has a peripheral pinion 22 having a conical set of teeth adapted to mesh with a third gear 23 that is rigidly coupled to head 7 and is keyed coaxially to axis w.

The meshing between third gear 23 and pinion 22 occurs while shaft 11 is in retracted position, so as to connect motor 15 to head 7, making it perform a rotation about axis w , on command, to move into machining position another spindle 8 that is intended for a subsequent machining operation.

An axial front cavity 24 is formed at the free end of hub 21, and has internal straight longitudinal grooves 25. Axial front cavity 24 is adapted to fit on a connecting tang 26 that is provided at the inside end of each spindle 8 and has external grooves 27 whose shape is substantially complementary to the internal grooves 25 of cavity 24. The coupling between cavity 24 and tang 26 occurs while shaft 11 is in the advanced position to connect motor 15 to spindle 8 involved in the machining.

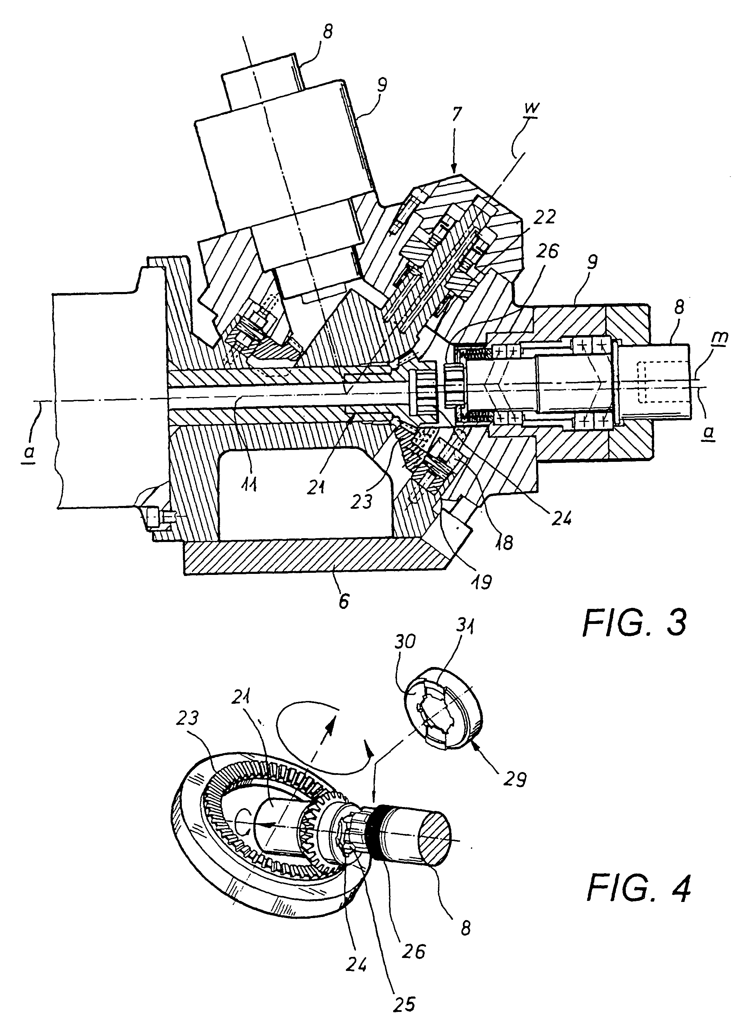

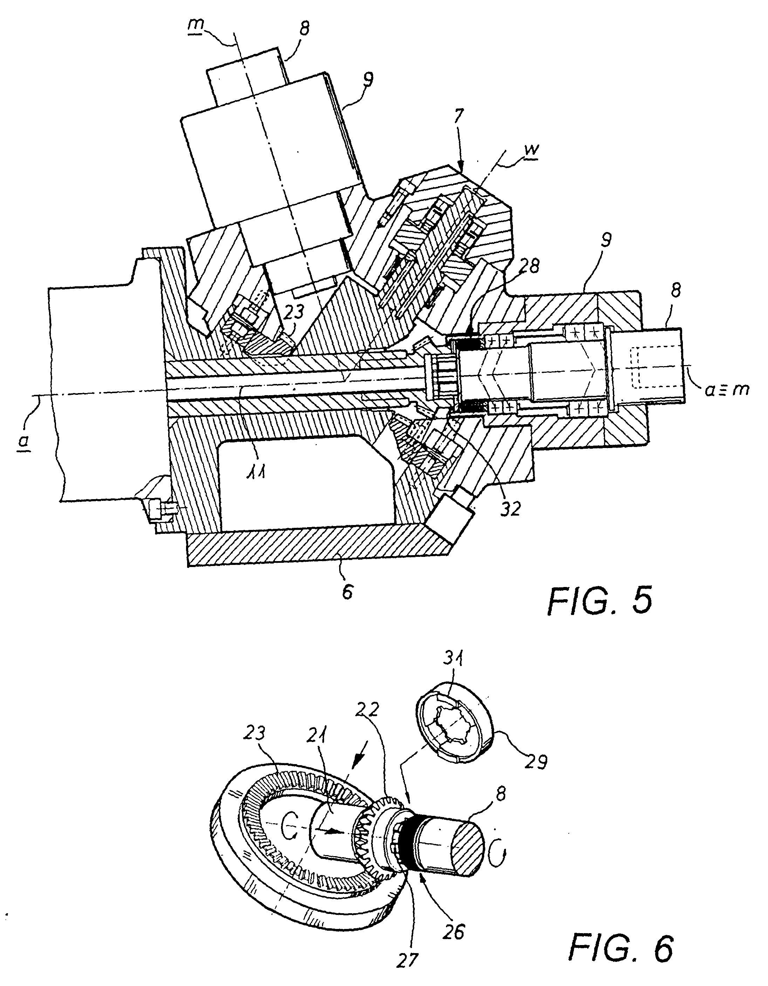

Namely, pinion 22 meshes with third gear 23 when shaft 11 is in its retracted position and head 7 is raised with respect to the support 6, as shown in Figure 3, or selectively, cavity 24 engages with tang 26 when shaft 11 is in its advanced position and head 7 is lowered on support 6, as shown in Figure 5.

Conveniently, the number of internal grooves 25 or external grooves 27, respectively of front cavity 24 or of tang 26, is a multiple of the number of spindles 8 that are mounted on head 7. Likewise, the number of teeth of third gear 23 is a multiple of the number of grooves 25 or 27.

Each spindle 8 includes a stop device 28 that acts on the tang at the end of its rotation, in a preset angular position, in which the external grooves 27 of tang 26 are aligned with the internal grooves 25 of cavity 24 of hub 21.

More specifically, stop device 28 is constituted by a disk 29 that is rotatably and slidingly accommodated in the respective bush 9 of each spindle 8, with the possibility of axial motion, but not of rotary motion, with respect to tang 26.

Disk 29 has a flat surface 30 that faces hub 21 and has radial protrusions 31 that are suitable to cooperate with corresponding recesses 32 that are formed at the inside end of bush 9.

There is an elastic means that is constituted by one or more springs 33 that act to the rear of disk 29 to keep protrusions 31 normally engaged in the corresponding recesses 32 when hub 21 is spaced from the flat surface 30 of disk 29.

When hub 21 engages on tang 26, the front surface of hub 21 faces the flat surface 30 of the disk and promotes the axial movement of the disk, overcoming the contrast force of springs 33 so as to disengage protrusions 31 from recesses 32, allowing the free rotation of spindle 8 inside the respective bush 9.

An encoder 34 is coupled to motor 15, or to main shaft 11, and is connected to a microprocessor-based control means, not shown in the drawings, and optionally integrated within the control unit of the machine tool, to stop motor 15 in a preset position, so that the angular position of hub 21 matches that of tang 26 that is fixed to the stop device 28.

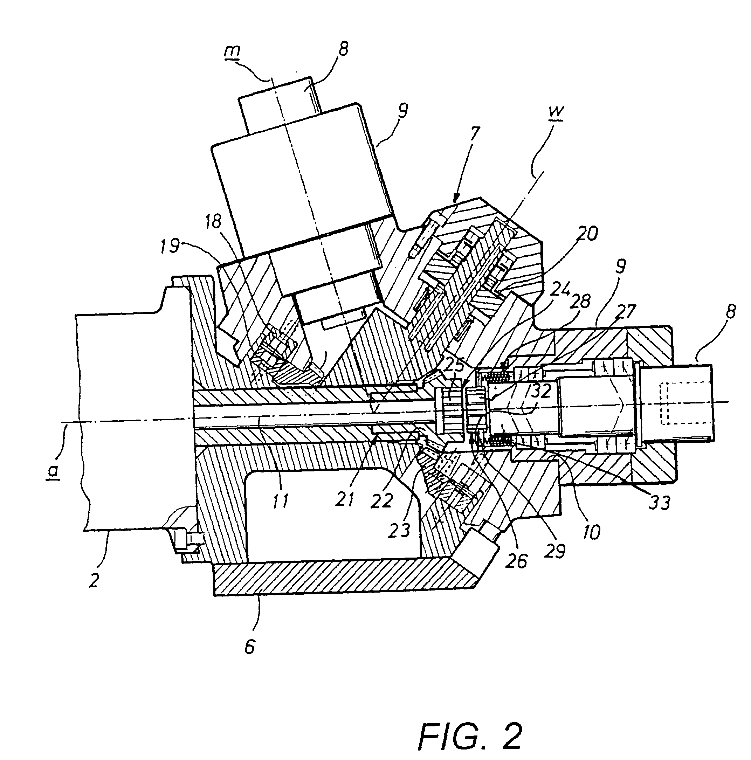

A second aspect of the invention provides for a method for changing the spindle of an above described machining unit that includes the following steps:
-- stopping the motor means and retracting the main shaft, so as to disengage the end hub from the tang of an active spindle, as shown in Figure 2;
-- simultaneously actuating the means for stopping the spindle in a preset angular position;
-- lifting the head to disengage its first crown gear from the meshing second crown gear of the support and to simultaneously engage its third crown gear of the head with the pinion, as shown in Figure 3;
-- actuating the motor means to promote the rotation of the head until another spindle is moved into alignment with the main shaft;
-- stopping the motor means and simultaneously causing the advancement of the shaft to disengage the pinion from the second crown gear of the head;
-- lowering the head onto the support and coupling the respective crown gears, with consequent indexing of the head;
-- causing the advancement of the shaft to engage the front cavity of the hub in the tang of the aligned spindle, so as to couple the spindle to the motor means, as shown in Figure 5;
-- actuating the motor means to make this last spindle rotate.

During the head rotation and indexing step, all the spindles are motionless, whereas the head is retracted, moving all the tools to a safety distance from the part being machined. Furthermore, during the machining step, only one spindle at a time turns, whereas all the other ones remain stationary, providing an evident energy saving and maximum accident-prevention safety.

All the above described spindle changing steps occur during the idle times for backoff and repositioning of carriage 3 with respect to the worktable, as prescribed by safety standards, to avoid collisions during the changing of spindles 8.

These idle times are on the order of a few seconds and are sufficient to change a spindle of the head without any further waste of time, to the full benefit of productivity.

The machining unit according to the invention is susceptible of numerous modifications and variations, all of which are within the scope of the inventive concept expressed by the accompanying claims. The materials, the shapes, and the dimensions may be any according to the requirements.

## Claims

1. Multispindle machining unit, particularly for numeric-control machining centers, comprising: a supporting structure (2) that has a first longitudinal axis (a) arranged radially with respect to a worktable (t); a support (6) anchored to an end of said supporting structure (2) in a position that is adjacent to said worktable; a spindlehead (7) rotatably mounted on said support (6) about a second rotation axis (w) that intersects said first axis (a); multiple tool spindles (8) mounted on said head (7) with secondary rotation axes (m) that converge toward the intersection point of said first axis (a) and said second axis (w); a transmission means for connecting said spindles (8) to a motor means (15) that is rigidly coupled to said supporting structure (2); and a means for rotating said head (7) to move each spindle (8) into an indexed operating position; **characterized in that** said transmission means can be selectively coupled either to said rotation means of the head (7), when said spindles (8) are not moving and are retracted with respect to the part being machined, or to a single spindle (8) that acts on the part being machined, with said head (7) in fixed indexing position;
said transmission means comprising a main shaft (11) that is parallel to said first axis (a) and is operatively coupled continuously to said motor means (15), said shaft (11) being able to move longitudinally between an advanced operating position, proximate to said head (7), and a retracted operating position, spaced from said head (7) by a first actuation means (17);
said unit further comprising a means for indexing said head (7) constituted by two first and second crown gears (18, 19) respectively associated with said head (7) and with said support (6), in mutually facing positions, to mutually and selectively engage in preset angular positions, in which one spindle (8) at a time is aligned with the axis (a) of the shaft (11);
said head (7) being supported so that it can slide along second rotation axis (w) which constitutes its indexing axis (w), a second actuator means (20) being provided and acting on the head (7) to promote its translatory motion in an axial direction between a lowered position, in which said first and second crown gears (18, 19) are closer and mutually engaged, and a raised position, in which said crown gears (18, 19) are mutually spaced and disengaged;
said shaft (11) having, at its advanced end, a hub (21) with a peripheral pinion (22) and a front axial cavity or seat (24) with straight internal grooves (25);
said head (7) having a third crown gear (23) adapted to mesh with the pinion (22) of said hub (21) when said shaft (11) is in its retracted position;
each spindle (8) having, at its internal end, a connecting tang (26) with external grooves (27) that are shaped complementarily to the internal grooves (25) of said front cavity or seat (24) of the hub (21) to engage in said cavity or seat by means of the passage of said main shaft (11) from its retracted position to its advanced position.

2. Machining unit according to claim 1, **characterized in that** the number of internal grooves (25) or external grooves (27), respectively of said front cavity or seat (24) or of said tang (26), is a multiple of the number of spindles (8) mounted on the head (7).

3. Machining unit according to claim 1, **characterized in that** the number of teeth of said crown gear (23) is a multiple of the number of internal grooves (25) or external grooves (27).

4. Machining unit according to one or more of the preceding claims, **characterized in that** each one of said spindles (8) comprises a stop device (28) that acts on said tang (26) at the end of its rotation, in a given angular position in which the external grooves (27) of the tang (26) are aligned with the internal grooves (25) of the front cavity or seat (24) of the hub (21).

5. Machining unit according to claim 4, **characterized in that** said spindles (8) are accommodated in respective bushes (9) that are inserted in said head (7), said stop device (28) being constituted by a disk (29) that is rotatably and slidingly accommodated in said bush (9) so that it can move axially but it cannot rotate with respect to said tang (26).

6. Machining unit according to claim 5, **characterized in that** said disk (29) has a flat surface (30) that faces said hub (21) and has radial protrusions (31) that are suitable to cooperate with corresponding recesses (32) formed at the inside end of said bush (9).

7. Machining unit according to claim 6, **characterized in that** it comprises an elastic means (33) that acts to the rear of said disk (29) to keep said protrusions (31) normally engaged in said recesses (32) when said hub (21) is spaced from the flat surface (30) of said disk (29).

8. Machining unit according to claim 7, **characterized in that** the front surface of the hub (21) faces the flat surface (30) of said disk (29) to promote its axial movement in contrast with the action of said elastic means (33), so as to disengage said protrusions (31) from said recesses (32) when the hub (21) engages on the tang (26), allowing the free rotation of the spindle (8) inside said bush (9).

9. Machining unit according to one or more of the preceding claims, **characterized in that** it comprises an encoder (34) that is mounted on said shaft (11) and is connected to a microprocessor-based control means to stop said motor means (15) so that the angular position of said hub (21) corresponds to the angular position of said tang (26), which is fixed by said stop device (28).

10. Machining unit according to one or more of the preceding claims, **characterized in that** said supporting structure (2) is mounted so that it can slide along guiding means that are parallel to said longitudinal axis (a) and are rigidly coupled to a machine tool that is provided with multiple machining units, each one corresponding to a machining station, an actuator means being provided which acts on said structure (2) to make it perform a translatory motion monolithically along said guiding means between a position in which said head (7) is closer and a position in which said head (7) is spaced from said worktable (t).

11. Method for changing the spindle of a machining unit according to one of the preceding claims, **characterized in that** it comprises the following steps:
stopping the motor means and retracting the main shaft, so
as to disengage the end hub from the tang of an active spindle;
simultaneously actuating the means for stopping the spindle in a preset angular position;
lifting said head to disengage the first crown gear from the meshing second crown gear of the support and to simultaneously engage the third crown gear of said head with said pinion;
actuating said motor means to promote the rotation of said head until another spindle is moved into alignment with said shaft;
stopping said motor means and simultaneously causing the advancement of said shaft to disengage said pinion from said third crown gear of said head;
lowering said head onto said support and coupling the respective crown gears, with consequent indexing of the head;
causing the advancement of said shaft to engage the front cavity or seat of said hub in the tang of the aligned spindle, so as to couple said spindle to said motor means;
actuating said motor means to make this last spindle rotate;
wherein during the head rotation and indexing step, all the spindles are motionless, whereas the head is retracted, moving all the tools to a safety distance from the part being machined, and wherein during the machining step a single spindle at a time rotates, while all the others remain stationary.

## Patentansprüche

1. Mehrspindelbearbeitungseinheit, insbesondere für numerisch gesteuerte Bearbeitungszentren, mit: einer Tragstruktur (2), die eine erste, bezüglich eines Werktisches (t) radial angeordnete Längsachse (a) aufweist; einem an einem Ende der Tragstruktur (2) in einer an den Werktisch angrenzenden Position verankerten Träger (6); einem an dem Träger (6) um eine zweite Drehachse (w), die die erste Achse (a) schneidet, drehbar angeordneten Spindelkopf (7); mehreren an dem Kopf (7) angeordneten Werkzeugspindeln (8) mit sekundären Rotationsachsen (m), die in Richtung des Schnittpunktes der ersten Achse (a) und der zweiten Achse (w) zusammenlaufen; einem Übertragungsmittel zum Verbinden der Spindeln (8) mit einem Motormittel (15), welches starr mit der Tragstruktur (2) verbunden ist; und einem Mittel zum Rotieren des Kopfes (7), um jede Spindel (8) in eine indizierte Arbeitsposition zu bewegen;
**dadurch gekennzeichnet,**
daß das Übertragungsmittel selektiv entweder mit dem Rotationsmittel des Kopfes (7) verbunden werden kann, wenn die Spindeln (8) sich nicht bewegen und relativ zu dem bearbeiteten Teil zurückgezogen sind, oder mit einer einzelnen Spindel (8), die auf das bearbeitete Teil einwirkt, wobei sich der Kopf (7) in einer festgelegten Indizierungsposition befindet;
daß das Übertragungsmittel eine Hauptwelle (11) aufweist, die sich parallel zu der ersten Achse (a) erstreckt und zum Betrieb dauerhaft mit dem Motormittel (15) verbunden ist, wobei die Welle (11) sich mittels eines ersten Betätigungsmittels (17) zwischen einer vorgeschobenen Arbeitsposition nahe dem Kopf (7) und einer zurückgezogenen Position, von dem Kopf (7) entfernt in Längsrichtung bewegen kann;
daß die Einheit weiterhin ein Mittel zum Indizieren des Kopfes (7) aufweist, welches durch zwei erste und zweite Kronenzahnräder (18, 19) gebildet wird, welche jeweils mit dem Kopf (7) bzw. dem Träger (6) in wechselseitig einander gegenüberliegenden Positionen verbunden sind, um wechselseitig und selektiv in vorbestimmten Winkelstellungen ineinanderzugreifen, in denen eine Spindel (8) zu einer Zeit mit der Achse (a) der Welle (11) in Ausrichtung ist;
daß der Kopf (7) so gestützt wird, daß er entlang der zweiten Rotationsachse (w) gleiten kann, die seine Indizierungsachse (w) bildet, wobei ein zweites Betätigungsmittel (20) angeordnet ist und auf den Kopf (7) wirkt, um dessen translatorische Bewegung in einer axialen Richtung zwischen einer abgesenkten Position, in der das erste und das zweite Kronenzahnrad (18, 19) näher aneinander liegen und wechselseitig in Eingriff stehen, und einer angehobenen Position, in der die Kronenzahnräder (18, 19) voneinander entfernt und nicht in Eingriff sind, zu bewirken;
daß die Welle (11) an ihrem vorderen Ende eine Nabe (21) mit einem peripheren Ritzel (22) und einer vorderen axialen Ausnehmung bzw. einem vorderen axialen Sitz (24) mit geraden innenliegenden Kerben (25) aufweist;
daß der Kopf (7) ein drittes Kronenzahnrad (23) aufweist, welches dazu ausgebildet ist, mit dem Ritzel (22) der Nabe (21) zu kämmen, wenn die Welle (11) sich in ihrer zurückgezogenen Position befindet;
daß jede Spindel (8) an ihrem inneren Ende einen Verbindungsmitnehmer (26) mit äußeren Kerben (27) aufweist, die komplementär zu den innenliegenden Kerben (25) der vorderen Ausnehmung bzw. des vorderen Sitzes (24) der Nabe (21) geformt sind, um in der Ausnehmung bzw. dem Sitz beim Übergang der Hauptwelle (11) aus ihrer zurückgezogenen Position in ihre vorgeschobene Position anzugreifen.

2. Bearbeitungseinheit nach Anspruch 1, **dadurch gekennzeichnet**, daß die Anzahl der innenliegenden Kerben (25) bzw. der äußeren Kerben (27) der vorderen Ausnehmung bzw. des vorderen Sitzes (24) bzw. des Mitnehmers (26) ein Vielfaches der Anzahl der an dem Kopf (7) angeordneten Spindeln (8) ist.

3. Bearbeitungseinheit nach Anspruch 1, **dadurch gekennzeichnet**, daß die Anzahl der Zähne des Kronenzahnrades (23) ein Vielfaches der Anzahl der innenliegenden Kerben (25) bzw. der äußeren Kerben (27) ist.

4. Bearbeitungseinheit nach einem oder mehreren der voranstehenden Ansprüche, **dadurch gekennzeichnet**, daß jede der Spindeln (8) eine Stoppvorrichtung (28) aufweist, die am Ende seiner Drehung in einer vorgegebenen Winkelposition, in der die äußeren Kerben (27) des Mitnehmers (26) mit den innenliegenden Kerben (25) der vorderen Ausnehmung bzw. des vorderen Sitzes (24) der Nabe (21) in Ausrichtung stehen, auf den Mitnehmer (26) wirkt.

5. Bearbeitungseinheit nach Anspruch 4, **dadurch gekennzeichnet**, daß die Spindeln (8) jeweils in Büchsen (9) angeordnet sind, die in dem Kopf (7) eingesetzt ist, wobei die Stoppvorrichtung (28) durch eine Scheibe (29) gebildet ist, die in der Büchse (9) drehbar und gleitbar angeordnet ist, so daß sie sich in axialer Richtung bewegen kann, sich jedoch bezüglich des Mitnehmers (26) nicht drehen kann.

6. Bearbeitungseinheit nach Anspruch 5, **dadurch gekennzeichnet**, daß die Scheibe (29) eine flache Oberfläche (30) aufweist, die der Nabe (21) gegenüberliegt, und daß sie radiale Vorsprünge (31) aufweist, die zum Zusammenwirken mit korrespondierenden, an der Innenseite der Büchse (9) ausgebildeten Vertiefungen (32) geeignet sind.

7. Bearbeitungseinheit nach Anspruch 6, **dadurch gekennzeichnet**, daß sie ein elastisches Mittel (33) aufweist, welches auf die Rückseite der Scheibe (29) einwirkt, um die Vorsprünge (31) normalerweise in Eingriff mit den Vertiefungen (32) zu halten, wenn die Nabe (21) von der flachen Oberfläche (30) der Scheibe (29) entfernt ist.

8. Bearbeitungseinheit nach Anspruch 7, **dadurch gekennzeichnet**, daß die vordere Oberfläche der Nabe (21) der flachen Oberfläche (30) der Scheibe (29) gegenüberliegt, um deren axiale Bewegung entgegen der Wirkung des elastischen Mittels (33) zu bewirken, um so die Vorsprünge (31) von den Vertiefungen (32) zu trennen, wenn die Nabe (21) an dem Mitnehmer (26) angreift, und so die freie Drehung der Spindel (8) im Innern der Büchse (9) zu ermöglichen.

9. Bearbeitungseinheit nach einem oder mehreren der voranstehenden Ansprüche, **dadurch gekennzeichnet**, daß diese einen Kodierer (34) aufweist, der an der Welle (11) angeordnet und mit einem mikroprozessorbasierenden Steuermittel verbunden ist, um das Motormittel (15) zu stoppen, so daß die Winkelposition der Nabe (21) der Winkelposition des Mitnehmers (26) entspricht, welcher durch die Stoppvorrichtung (28) festgelegt ist.

10. Bearbeitungseinheit nach einem oder mehreren der voranstehenden Ansprüche, **dadurch gekennzeichnet**, daß die Tragstruktur (2) so angeordnet ist, daß sie entlang von Führungsmitteln gleiten kann, die sich parallel zu der Längsachse (a) erstrecken und starr mit einem Bearbeitungswerkzeug verbunden sind, welches mehrere Bearbeitungseinheiten aufweist, von denen jede einer Bearbeitungsstation entspricht, daß ein Betätigungsmittel angeordnet ist, welches auf die Struktur (2) wirkt, um diese zu einer monolithischen Translationsbewegung entlang der Führungsmittel zwischen einer Position, in der der Kopf (7) näher an dem Werktisch (t) liegt, und einer Position, in der der Kopf (7) von dem Werktisch (t) entfernt ist, zu bringen.

11. Verfahren zum Wechseln der Spindel einer Bearbeitungseinheit nach einem der voranstehenden Ansprüche,
**dadurch gekennzeichnet,**
daß es die folgenden Schritte enthält:
Anhalten des Motormittels und Zurückziehen der Hauptwelle, um so die Endnabe von dem Mitnehmer einer aktiven Spindel zu trennen;
gleichzeitiges Betätigen des Mittels zum Stoppen der Spindel in einer vorgegebenen Winkelposition;
Anheben des Kopfes, um das erste Kronenzahnrad aus dem Eingriff mit dem zweiten Kronenzahnrad des Trägers zu lösen und um gleichzeitig das dritte Kronenzahnrad des Kopfes mit dem Ritzel in Eingriff zu bringen;
Betätigen des Motormittels, um die Rotation des Kopfes zu bewirken, bis eine andere Spindel in Ausrichtung mit der Welle gebracht ist;
Anhalten des Motormittels und gleichzeitiges Bewirken des Vorschiebens der Welle, um das Ritzel von dem dritten Kronenzahnrad des Kopfes zu lösen;
Absenken des Kopfes auf den Träger und Verbinden der jeweiligen Kronenzahnräder mit einer daraus folgenden Indizierung des Kopfes;
Bewirken des Vorschiebens der Welle, um die vordere Ausnehmung bzw. den vorderen Sitz der Nabe mit dem Mitnehmer der ausgerichteten Spindel in Eingriff zu bringen, um so die Spindel mit dem Motormittel zu verbinden;
Betätigen des Motormittels, um diese letztgenannte Spindel in Rotation zu versetzen;
wobei während des Schrittes des Drehens des Kopfes und des Indizierens alle Spindeln stillstehen, wobei der Kopf zurückgezogen wird und alle Werkzeuge in einen Sicherheitsabstand zu dem bearbeiteten Teil bewegt werden, und wobei während des Bearbeitungsschritts nur eine Spindel zur Zeit rotiert, während alle anderen in Ruhe bleiben.

## Revendications

1. Unité d'usinage multibroche, en particulier pour centres d'usinage à commande numérique, comprenant : une structure de support (2) ayant un premier axe longitudinal (a) disposé radialement par rapport à une table d'usinage (t); un support (6) ancré sur une extrémité de ladite structure de support (2), dans une position adjacente à ladite table; une tête de broche (7) montée de façon rotative dans ledit support (6), tournant autour d'un deuxième axe de rotation (w) qui coupe ledit premier axe (a); plusieurs broches à outils (8) montées dans ladite tête (7), présentant des axes de rotation secondaires (m) qui convergent vers le point d'intersection dudit premier axe (a) et dudit deuxième axe (w); un moyen de transmission permettant de relier lesdites broches (8) à un moyen moteur (15) qui est rigidement couplé à ladite structure de support (2); et un moyen permettant de faire tourner ladite tête (7) de façon à amener chaque broche (8) dans une position indexée de fonctionnement;
**caractérisée en ce que** ledit moyen de transmission peut être accouplé de façon sélective, soit audit moyen de rotation de la tête (7), quand lesdites broches (8) ne bougent pas et sont reculées par rapport à la pièce à usiner, soit à une seule des broches (8), qui agit sur la pièce à usiner, pendant que ladite tête (7) se trouve dans une position fixe d'indexation;
ledit moyen de transmission comprenant un arbre principal (11) qui est parallèle audit premier axe (a) et est fonctionnellement couplé de façon permanente audit moyen moteur (15), ledit arbre (11) pouvant être déplacé longitudinalement entre une position de fonctionnement avancée, proche de ladite tête (7), et une position de fonctionnement reculée, éloignée de ladite tête (7), par un premier moyen actionneur (17);
ladite unité comprenant en outre un moyen pour indexer ladite tête (7), constitué de deux première et deuxième roues plates (18, 19) respectivement associées à ladite tête (7) et audit support (6), positionnées en vis-à-vis, destinées à s'engager l'une dans l'autre de façon sélective dans des positions angulaires préréglées, dans lesquelles une broche (8) à la fois est alignée sur l'axe (a) de l'arbre (11);
ladite tête (7) étant supportée de manière telle qu'elle puisse coulisser le long dudit deuxième axe de rotation (w) qui constitue son axe d'indexation (w), un deuxième moyen actionneur (20) étant prévu et agissant sur la tête (7) de manière à effectuer le mouvement de translation de celle-ci dans une direction axiale, entre une position abaissée, dans laquelle lesdites première et deuxième roues plates (18, 19) sont rapprochées et sont en engagement mutuel, et une position relevée, dans laquelle lesdites roues plates (18, 19) sont espacées et désengagées l'une de l'autre;
ledit arbre (11) comportant, à son extrémité avant, un moyeu (21) portant un pignon périphérique (22) et une cavité axiale frontale ou portée (24) pourvue de cannelures droites intérieures (25);
ladite tête (7) comprenant une troisième roue plate (23) destinée à s'engrener dans le pignon (22) dudit moyeu (21) lorsque ledit arbre (11) se trouve dans sa position reculée;
chaque broche (8) comprenant, à son extrémité intérieure, un bout d'arbre coupleur (26) comportant des cannelures extérieures (27) dont la forme est complémentaire des cannelures intérieures (25) de ladite cavité frontale ou portée (24) du moyeu (21), de manière à s'engager dans ladite cavité ou portée grâce au passage dudit arbre principal (11) de sa position reculée vers sa position avancée.

2. Unité d'usinage selon la revendication 1, **caractérisée en ce que** le nombre de cannelures intérieures (25) ou de cannelures extérieures (27) de ladite cavité frontale ou portée (24) ou dudit bout d'arbre (26) est un multiple du nombre de broches (8) montées dans la tête (7).

3. Unité d'usinage selon la revendication 1, **caractérisée en ce que** le nombre de dents de ladite roue plate (23) est un multiple du nombre de cannelures intérieures (25) ou de cannelures extérieures (27).

4. Unité d'usinage selon l'une ou plusieurs des revendications précédentes, **caractérisée en ce que** chacune des broches (8) comporte un dispositif d'arrêt (28) qui agit sur ledit bout d'arbre (26) à la fin de sa rotation, dans une position angulaire donnée, dans laquelle les cannelures extérieures (27) du bout d'arbre (26) sont alignées sur les cannelures intérieures (25) de la cavité frontale ou portée (24) du moyeu (21).

5. Unité d'usinage selon la revendication 4, **caractérisée en ce que** lesdites broches (8) sont logées dans des boisseaux respectifs (9) qui sont insérés dans ladite tête (7), ledit dispositif d'arrêt (28) étant constitué d'un disque (29) monté de façon rotative et coulissante dans ledit boisseau (9), de manière qu'il puisse se déplacer axialement, mais ne puisse pas tourner par rapport audit bout d'arbre (26).

6. Unité d'usinage selon la revendication 5, **caractérisée en ce que** ledit disque (29) comporte une surface plate (30) faisant face audit moyeu (21), et des saillies radiales (31) adaptées à coopérer avec des évidements correspondants (32) ménagés dans l'extrémité intérieure dudit boisseau (9).

7. Unité d'usinage selon la revendication 6, **caractérisée en ce que** qu'elle comprend un moyen élastique (33), qui agit sur l'arrière dudit disque (29) de manière à maintenir les saillies (31) normalement engagées dans lesdits évidements (32), lorsque ledit moyeu (21) est éloigné de la surface plate (30) dudit disque (29).

8. Unité d'usinage selon la revendication 7, **caractérisée en ce que** la surface frontale du moyeu (21) fait face à la surface plate (30) dudit disque, de manière à provoquer son déplacement axial à l'encontre de l'action desdits moyens élastiques (33), de façon à désengager lesdites saillies (31) desdits évidements (32), lorsque le moyeu (21) vient en engagement avec ledit bout d'arbre (26), permettant ainsi la rotation libre de la broche (8) à l'intérieur du boisseau (9).

9. Unité d'usinage selon l'une ou plusieurs des revendications précédentes, **caractérisée en ce que** qu'elle comprend un codeur (34) qui est monté sur ledit arbre (11) et relié à un moyen de commande à base de microprocesseur destiné à stopper ledit moyen moteur (15), de manière que la position angulaire dudit moyeu (21) corresponde à la position angulaire dudit bout d'arbre (26) qui est immobilisé par ledit dispositif d'arrêt (28).

10. Unité d'usinage selon l'une ou plusieurs des revendications précédentes, **caractérisée en ce que** ladite structure de support (2) est montée de manière qu'elle puisse coulisser le long de moyens de guidage qui sont parallèles audit axe longitudinal (a) et sont rigidement couplés à une machine-outil qui est pourvue de plusieurs unités d'usinage dont chacune correspond à un poste d'usinage, un moyen actionneur étant prévu, qui agit sur ladite structure (2) de manière à lui faire effectuer un mouvement en translation, de façon monolithique le long desdits moyens de guidage, entre une position, dans laquelle ladite tête (7) est rapprochée, et une position, dans laquelle ladite tête (7) est éloignée de ladite table d'usinage (t).

11. Procédé de changement de la broche d'une unité d'usinage selon l'une des revendications précédentes, **caractérisé en ce qu**'il comprend les étapes suivantes :
arrêter le moyen moteur et reculer l'arbre principal, de manière à désengager le moyeu terminal du bout d'arbre d'une broche active;
actionner en même temps le moyen d'arrêt pour arrêter la broche dans une position angulaire préréglée;
lever ladite tête de manière à désengager la première roue plate de son engrènement avec la deuxième roue plate du support, et à amener simultanément la troisième roue plate de ladite tête en engagement avec ledit pignon;
actionner ledit moyen moteur de manière à déclencher la rotation de ladite tête, jusqu'à ce qu'une autre broche ait été amenée jusqu'en alignement avec ledit arbre;
arrêter ledit moyen moteur et en même temps provoquer l'avance dudit arbre de manière à désengager ledit pignon de ladite troisième roue plate de ladite tête;
abaisser ladite tête sur ledit support et accoupler les roues plates respectives, entraînant ainsi l'indexation de la tête;
provoquer l'avance dudit arbre de manière que la cavité frontale ou portée dudit moyeu s'engage sur le bout d'arbre de la broche alignée, de façon à accoupler ladite broche audit moyen moteur;
actionner ledit moyen moteur de manière à mettre en rotation cette dernière broche;
où, pendant les étapes de rotation et d'indexation de la tête, toutes les broches sont immobiles, alors que la tête recule, amenant ainsi tous les outils à une distance de sécurité par rapport à la pièce usinée, et où, pendant l'étape d'usinage, une seule broche à la fois tourne, alors que toutes les autres restent stationnaires.
